# EUROPEAN PATENT APPLICATION

(11) **EP 2 448 359 A1**
(43) Date of publication of application: **02.05.2012**
(21) Application number: 10803898.5
(22) Date of filing: 27.07.2010
(51) Int. Cl.: H04W 76/02

(54) **METHOD, DEVICE AND SYSTEM FOR RELAY TO ESTABLISH CONNECTION WITH BASE STATION**

(30) Priority: 29.07.2009 CN 200910109250
(71) Applicant: Huawei Technologies Co., Ltd., Guangdong 518129 (CN)
(72) Inventor: XIAO, Dengkun, Shenzhen Guangdong 518129 (CN); WANG, Wenjie, Shenzhen Guangdong 518129 (CN); HUANG, Jian, Shenzhen Guangdong 518129 (CN); QU, Tongwei, Shenzhen Guangdong 518129 (CN); XIONG, Xin, Shenzhen Guangdong 518129 (CN); QIN, Zhongbin, Shenzhen Guangdong 518129 (CN); XIAO, Weimin, Shenzhen Guangdong 518129 (CN); LI, Anjian, Shenzhen Guangdong 518129 (CN); HE, Yuan, Shenzhen Guangdong 518129 (CN); HAN, Jing, Shenzhen Guangdong 518129 (CN); YU, Yinghui, Shenzhen Guangdong 518129 (CN); MA, Hui, Shenzhen Guangdong 518129 (CN)
(74) Representative: Thun, Clemens
(86) International application number: PCT/CN2010/075469
(87) International publication number: WO 2011/012065

(57) **Abstract**

A method, a device and a system for a relay to establish a connection with a base station are disclosed according to the embodiments of the present invention. The method includes: receiving interface information sent from a serving base station; obtaining resource information from the interface information, where the resource information is used for indicating wireless resources used when the relay communications with a non-serving base station; and establishing a wireless connection with the non-serving base station in the wireless resources indicated by the resource information. According to the method, the device and the system, the technical problem of establishing a wireless connection with an adjacent non-serving base station is resolve, and a foundation for reducing the communication time delay with the adj acent non-serving base station is laid.

## Description

This application claims priority to China Patent Application No. 200910109250.8, filed with the Chinese Patent Office on July 29, 2009 and entitled "METHOD, DEVICE AND SYSTEM FOR A RELAY TO ESTABLISH A CONNECTION WITH A BASE STATION", which is incorporated herein by reference in its entirety.

### FIELD OF THE INVENTION

The present invention relates to communications technologies, and in particular, to a method, a device and a system for a relay to establish a connection with a base station.

### BACKGROUND OF THE INVENTION

With the rapid development of high-speed network technologies and multimedia technologies, the wireless network is developed very rapidly. Radio waves have an attenuation problem, and a high working frequency results in very limited coverage of base stations. Therefore, the existing technology adds wireless relays to the network to enlarge the coverage of the system.

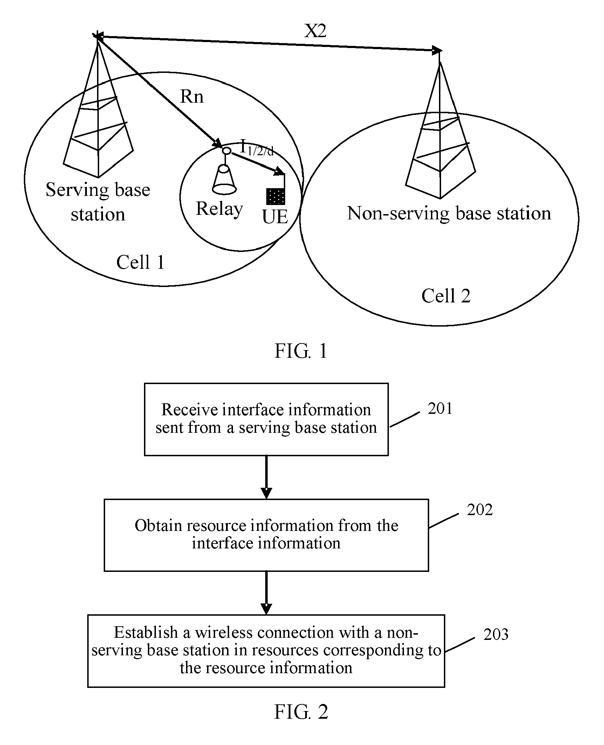

A wireless relay communicates with a base station through an air interface, and the base station is called as a serving base station. A base station that is also close to a wireless relay but does not establish a connection with the wireless relay is called as a non-serving base station, as shown in FIG. 1. A relay is connected to a serving base station through an Rn interface, and a serving base station is connected to a non-serving base station through an X2 interface. If the relay needs to exchange data with the non-serving base station, the relay needs to transmit data to the serving base station, and then the serving base station forwards the data to the non-serving base station. In practice, a relay often exchanges data with a non-serving base station. For example, if a relay is disturbed by an adjacent non-serving base station, the relay needs to send load indication information to the non-serving base station to search for disturbing users; if a UE in FIG. 1 is switched over from a cell 1 to a cell 2, a relay also needs to exchange information with a non-serving base station; in the case of CoMP (Cooperation multi-points) coordination, a relay also needs to exchange information with a non-serving base station.

In the implementation process of the present invention, the inventors find that, a relay in the existing technology needs to communicate with a non-serving base station through an Rn interface and an X2 interface, resulting in double time delay.

### SUMMARY OF THE INVENTION

Embodiments of the present invention provide a method, a device and a system for a relay to establish a connection with a base station, which are used for a relay to establish a connection with a non-serving base station.

A method for a relay to establish a connection with a base station provided in an embodiment of the present invention includes:
receiving interface information sent from a serving base station;
obtaining resource information from the interface information, where the resource information is used for indicating wireless resources used when the relay communicates with a non-serving base station; and
establishing a wireless connection with the non-serving base station in the wireless resources indicated by the resource information.

A relay provided in an embodiment of the present invention includes:
a first receiving module, configured to receive interface information sent from a serving base station;
a first obtaining module, configured to obtain resource information from the interface information received by the first receiving module, where the resource information is used for indicating wireless resources used when the relay communicates with a non-serving base station; and
a first establishing module, configured to establish a wireless connection with the non-serving base station in the wireless resources indicated by the resource information obtained by the first obtaining module.

A base station provided in an embodiment of the present invention includes:
a second sending module, configured to send interface information to a relay, where the interface information includes resource information used for indicating wireless resources used when the relay communicates with a non-serving base station; and
a third sending module, configured to send the interface information to the non-serving base station, where the interface information includes resource information used for indicating wireless resources used when the non-serving base station communicates with the relay.

A communication system provided in an embodiment of the present invention includes:
a relay, configured to receive interface information sent from a serving base station; obtain resource information from the interface information, where the resource information is used for indicating wireless resources used when the relay communications with a non-serving base station; and establish a wireless connection with the non-serving base station in the resources indicated by the resource information; and
a base station, configured to send interface information to the relay, where the interface information includes the resource information used for indicating the wireless resources used when the relay communicates with the non-serving base station; and send the interface information to the non-serving base station, where the interface information includes the resource information used for indicating the wireless resources used when the non-serving base station communications with the relay.

According to a method, a device and a system for a relay to establish a connection with a base station provided by the embodiments of the present invention, a connection is established in the foregoing resources finally, by receiving interface information sent from a serving base station, selecting frequency bands or proceeding with the receiving of an uplink polling interval. The technical problem of establishing a wireless connection with an adj acent non-serving base station is resolved, so as to lay a foundation for reducing communication time delay with the adjacent non-serving base station.

### BRIEF DESCRIPTION OF THE DRAWINGS

FIG. 1 is a schematic diagram of a wireless connection between a relay and a base station in the existing technology;

FIG. 2 is a schematic diagram of an embodiment of establishing a connection according to an embodiment of the present invention;

FIG. 3 is a schematic diagram of an embodiment of establishing a connection by using a frequency division method according to an embodiment of the present invention;

FIG. 4 is an information flow chart of establishing a connection by using a frequency division method according to an embodiment of the present invention;

FIG. 5 is a schematic structural diagram of a relay according to an embodiment of the present invention;

FIG. 6 is a schematic structural diagram of a base station according to an embodiment of the present invention;

FIG. 7 is a schematic diagram of a communication system according to an embodiment of the present invention;

FIG. 8 is a schematic diagram of an embodiment of establishing a connection by using a time division method according to the present invention;

FIG. 9 is an information flow chart of establishing a connection by using a time division method according to an embodiment of the present invention;

FIG. 10 is a schematic structural diagram of a relay according to an embodiment of the present invention;

FIG. 11 is a schematic structural diagram of a base station according to an embodiment of the present invention; and

FIG. 12 is a schematic diagram of a communication system according to an embodiment of the present invention.

### DETAILED DESCRIPTION OF THE EMBODIMENTS

In the implementation process of embodiments of the present invention, the inventors find that, a relay often needs to exchange data with an adjacent non-serving base station. However, in the existing technology, no interface (including a wireless interface and a wired interface) exists between a relay and a non-serving base station. Therefore, the forwarding needs to be completed through a serving base station, resulting in the increase of time delay. The increased time delay also influences other performances of a system. For example, in a case of searching for disturbing users, the time delay results in the decrease of throughput.

FIG. 2 is a schematic diagram of an embodiment of establishing a connection according to an embodiment of the present invention, where the embodiment includes the following steps:

Step 201: Receive interface information sent from a serving base station.

Step 202: Obtain resource information from the interface information, where the resource information is used for indicating wireless resources used when a relay communicates with a non-serving base station.

Step 203: Establish a wireless connection with the non-serving base station in the resources indicated by the resource information.

The embodiment is applicable to a process in which a relay establishes a connection with an adjacent non-serving base station by using a frequency division method. A relay first receives interface information sent from a serving base station, obtains resource information from the interface information to use the resource information for communicating with a non-serving base station, and finally establishes a connection with the non-serving base station in selected resources. Each step is described in detail in the following.

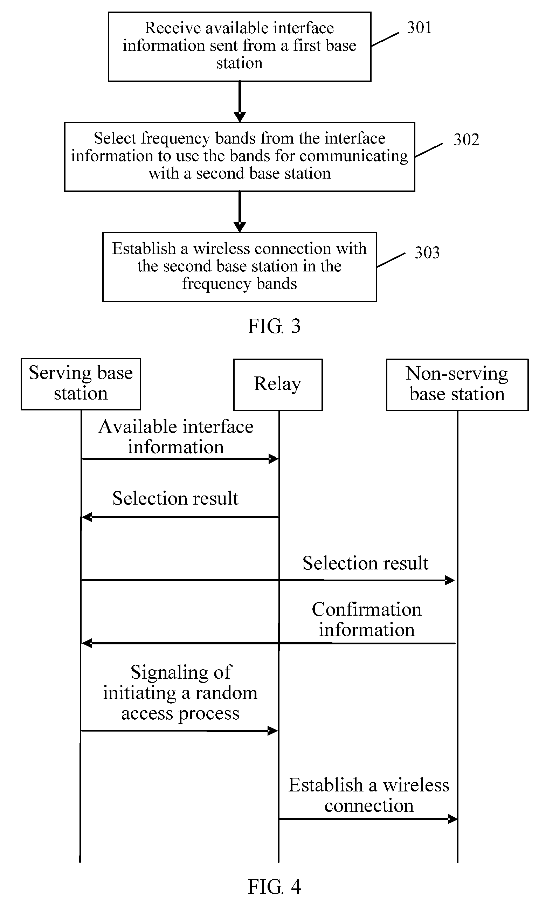

In the process of establishing a wireless connection between a relay and a non-serving base station, a serving base station sends interface information to the relay, where the interface information may include time domain resources, or frequency domain resources, or both time domain and frequency domain resources. Specifically, when the resources are time domain resources, the serving base station may send time slot information to the relay; when the resources are frequency domain resources, the serving base station may send frequency bands to the relay; when the resources are both time domain and frequency domain resources, the serving base station may send the time domain and frequency domain resources to the relay simultaneously. Methods of obtaining the resource information include: direct parse, generally applied when only a pair of uplink and downlink resources are received; or selecting uplink and downlink resources from a selectable resource set, generally applied when multiple pairs of uplink and downlink resources are received. The serving base station may send, to the relay, signaling of initiating a random access process. If no feedback is given, the non-serving base station may learn a selection result of a UE through monitoring. Finally, the relay establishes a wireless connection with the non-serving base station in the frequency bands. A schematic diagram of the process is shown in FIG. 4.

After a connection is established, a relay can send information to a non-serving base station through the connection. For example, if a relay is disturbed by an adjacent non-serving base station, the relay can directly send load indication information to the non-serving base station through the interface to search for disturbing users. Therefore, time delay is reduced by 50% and throughput is increased. For another example, if a UE is switched over from a serving base station to a non-serving base station or in the case of CoMP coordination, a relay can also exchange information with the non-serving base station through the interface, thereby reducing time delay by 50% compared with the existing technology.

The embodiment of the present invention resolves a technical problem of establishing a wireless connection between a relay and an adjacent non-serving base station, and lays a foundation for reducing the communication time delay with the adjacent non-serving base station.

FIG. 3 is a schematic diagram of an embodiment of establishing a connection by using the frequency division method according to the present invention, where the embodiment includes the following steps:

Step 301: Receive interface information sent from a serving base station.

Step 302: Select frequency bands from the foregoing interface information to use the bands for communicating with a non-serving base station.

Step 303: Establish a wireless connection with the non-serving base station in the foregoing frequency bands.

The embodiment is applicable to a process in which a relay establishes a connection with an adj acent non-serving base station by using a frequency division method. A relay first receives interface information sent from a serving base station, then selects uplink and downlink frequency bands from the interface information to use the bands for communicating with a non-serving base station, and finally establishes a connection with the non-serving base station in the selected frequency bands. Each step is described in detail in the following.

In the process of establishing a wireless connection between a relay and a non-serving base station, a serving base station sends interface information to the relay. When the non-serving base station supports the receiving and sending of data in all frequency bands, the interface information may include information A1 about a set of frequency bands that are not used by the foregoing serving base station or a base station around the serving base station, or information A2 about a set of frequency bands that are used by the foregoing serving base station and a base station around the serving base station. When the non-serving base station supports the receiving and sending of the data only in some frequency bands, the interface information may include information A3 about a set of frequency bands that are not used by the foregoing serving base station or a base station around the serving base station and are supported by the non-serving base station. Specifically, when the non-serving base station supports different frequency bands in uplink and downlink, the A3 set is further required to be divided into two subsets, where A3a is information about a set of frequency bands that are not used by the foregoing serving base station or a base station around the serving base station and are supported by the non-serving base station in the downlink, and A3b is information about a set of frequency bands that are not used by the foregoing serving base station or a base station around the serving base station and are supported by the non-serving base station in the uplink. After receiving the information, the relay selects frequency bands that are suitable to be used by itself. The selection method is as follows: It is assumed that a set of frequency bands that are supported by the relay and are for transmitting data is a set B (likewise, the relay may possibly support different frequency bands in the uplink and downlink, and then B is divided into two sets. The detailed method of dividing B is similar to that of dividing A3, which will not be described herein again). If the set A1 or A3 is received, a UE selects frequency bands in the intersection of A1 and B or the intersection of A3 and B. If the set A2 is received, the UE selects frequency bands in the intersection of the complementary set of A2 and B. After the selection, the relay may or may not feed back the frequency bands to the serving base station. If the relay feeds back the frequency bands to the serving base station, the serving base station sends, to a neighboring non-serving base station, carrier information selected by the relay. After receiving the information, the non-serving base station feeds back confirmation information. The serving base station may send, to the relay, signaling of initiating a random access process. If the relay does not feed back the frequency bands to the serving base station, the non-serving base station may learn a selection result of the UE through monitoring. Finally, the relay establishes a wireless connection with the non-serving base station in the foregoing frequency bands. A schematic diagram of the process is shown in FIG. 4.

After a connection is established, a relay can send information to a non-serving base station through the connection. For example, if a relay is disturbed by an adjacent non-serving base station, the relay can directly send load indication information to the non-serving base station through an interface to search for disturbing users, thereby reducing time delay by 50% and increasing throughput. For another example, if a UE is switched over from a serving base station to a non-serving base station or in the case of CoMP coordination, a relay can also exchange information with the non-serving base station through the interface, thereby reducing time delay by 50% compared with the existing technology.

The embodiment of the present invention resolves the technical problem of establishing a wireless connection between a relay and an adjacent non-serving base station, and lays the foundation for reducing communication time delay with the adj acent non-serving base station.

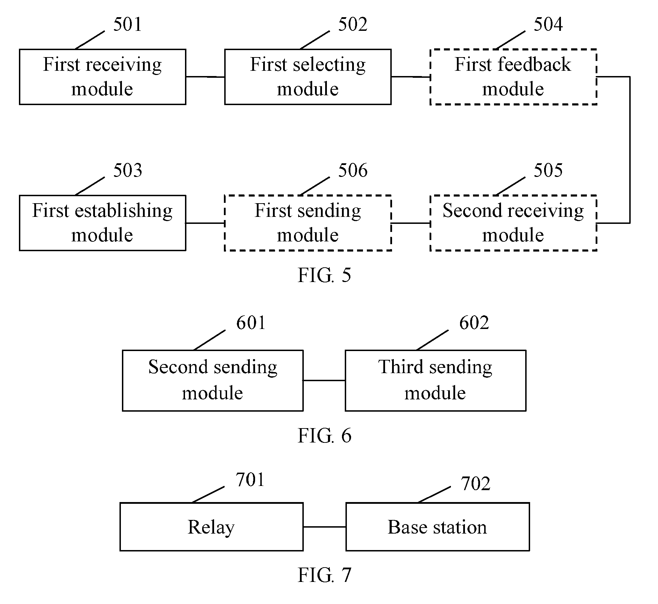

FIG. 5 is a schematic structural diagram of a relay according to an embodiment of the present invention, where the embodiment includes:
a first receiving module 501, configured to receive interface information sent from a serving base station;
a first selecting module 502, configured to select frequency bands from the interface information to use the bands for communicating with a non-serving base station; and
a first establishing module 503, configured to establish a wireless connection with the non-serving base station in the frequency bands.

The embodiment may further include:
a first feedback module 504, configured to send, to the serving base station, information about the frequency bands selected by the first selecting module; or
a second receiving module 505, configured to receive signaling that is of requiring initiating a random access process with the non-serving base station and is sent from the serving base station; or
a first sending module 506, configured to send connection establishment completion information to the serving base station.

This embodiment is applicable to the embodiment shown in FIG. 3. The characteristics of this embodiment will not be described herein again.

FIG. 6 is a schematic structural diagram of a base station according to an embodiment of the present invention, where the embodiment includes:
a second sending module 601, configured to send interface information; and
a third sending module 602, configured to send, to a non-serving base station, information about frequency bands selected by a relay.

This embodiment is applicable to the embodiment shown in FIG. 3. The characteristics of this embodiment will not be described herein again.

FIG. 7 is a schematic diagram of a communication system according to an embodiment of the present invention, where the embodiment includes:
a relay 701, configured to receive interface information sent from a serving base station, select frequency bands from the interface information to use the bands for communicating with a non-serving base station, and establish a wireless connection with the non-serving base station in the frequency bands; and
a base station 702, configured to send the interface information and send information about the frequency bands selected by the relay to the non-serving base station.

This embodiment is applicable to the embodiment shown in FIG. 3. The characteristics of this embodiment will not be described herein again.

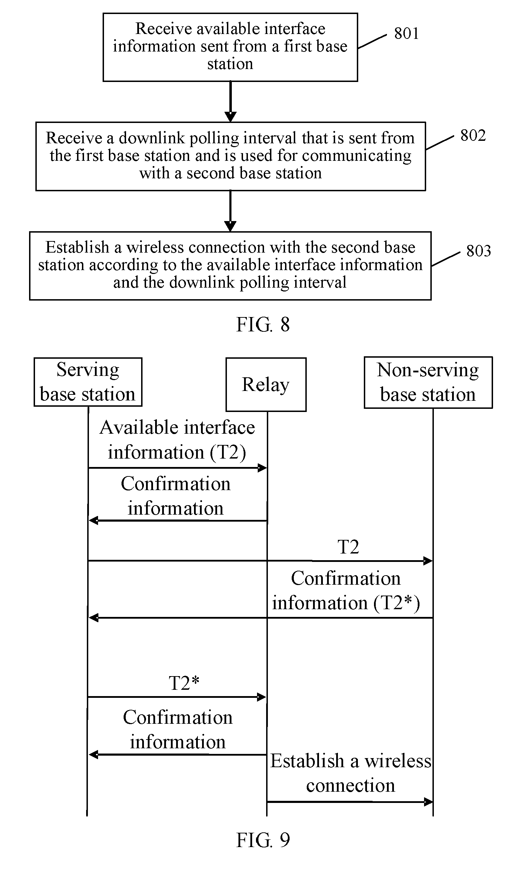

FIG. 8 is a schematic diagram of an embodiment of establishing a connection by using a time division method according to the present invention, where the embodiment includes the following steps:

Step 801: Receive interface information sent from a serving base station.

Step 802: Receive a downlink polling interval that is sent from the serving base station and is used for communicating with a non-serving base station.

Step 803: Establish a wireless connection with the non-serving base station according to the interface information and the downlink polling interval.

The embodiment is applicable to a process in which a relay establishes a connection with an adjacent non-serving base station by using a time division method. A relay first receives interface information sent from a serving base station, then receives a downlink polling interval that is sent from the serving base station and is used for communicating with a non-serving base station, and finally establishes a connection with the non-serving base station in a selected time segment. Each step is described in detail in the following.

In the process of establishing a wireless connection between a relay and a non-serving base station, a serving base station sends interface information to the relay, where the interface information includes an uplink polling interval T2 that is used for communicating with the non-serving base station. After receiving T2, the relay can feed back confirmation information to the serving base station, and then the serving base station sends T2 to the non-serving base station. After receiving the information, the non-serving base station feeds back confirmation information, and attaches, in the confirmation information, its own downlink polling interval T2* used for communicating with the relay. The serving base station sends T2* to the relay. After receiving T2*, the relay may feed back confirmation information to the serving base station. A wireless connection is established according to T2 and T2*. That is, the relay sends information to the non-serving base station at an interval of T2, and the non-serving base station sends information to the relay at an interval of T2*. The information process is shown in Fig. 9.

After a connection is established, a relay can send information to a non-serving base station through the connection. For example, if a relay is disturbed by an adjacent non-serving base station, the relay can directly send load indication information to the non-serving base station through an interface to search for disturbing users, thereby reducing time delay by 50% and increasing throughput. For another example, if a UE is switched over from a serving base station to a non-serving base station or in the case of CoMP, a relay can also exchange information with the non-serving base station through the interface, thereby reducing time delay by 50% compared with the existing technology.

The embodiment of the present invention resolves a technical problem of establishing a wireless connection between a relay and an adjacent non-serving base station in another way, and lays a foundation for reducing communication time delay with the adjacent non-serving base station.

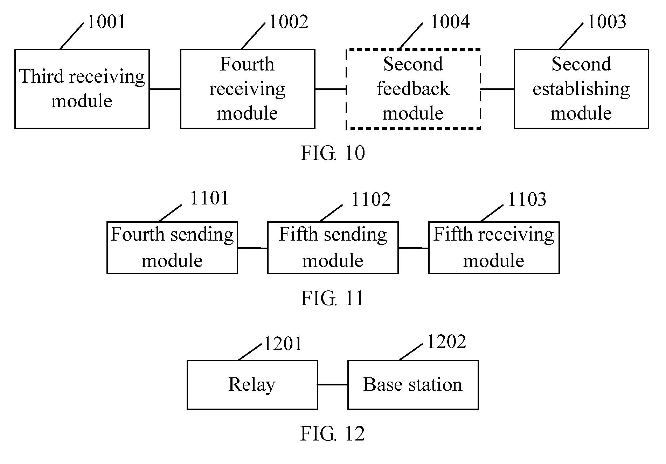

FIG. 10 is a schematic structural diagram of a relay according to an embodiment of the present invention, where the embodiment includes:
a third receiving module 1001, configured to receive interface information sent from a serving base station;
a fourth receiving module 1002, configured to receive a downlink polling interval that is sent from the serving base station and is used for communicating with a non-serving base station; and
a second establishing module 1003, configured to establish a wireless connection with the non-serving base station according to the interface information and the downlink polling interval.

The embodiment may further include:
a second feedback module 1004, configured to feed back confirmation information.

This embodiment is applicable to the embodiment shown in FIG. 8. The characteristics of this embodiment will not be described herein again.

FIG. 11 is a schematic structural diagram of a base station according to an embodiment of the present invention, where the embodiment includes:
a fourth sending module 1101, configured to send interface information;
a fifth sending module 1102, configured to send, to a non-serving base station, an uplink polling interval used for communicating with the non-serving base station; and
a fifth receiving module 1103, configured to receive a downlink polling interval that is sent from the non-serving base station and is used for communicating with the non-serving base station.

This embodiment is applicable to the embodiment shown in FIG. 8. The characteristics of this embodiment will not be described herein again.

FIG. 12 is a schematic diagram of a communication system according to an embodiment of the present invention, where the embodiment includes:
a relay 1201, configured to receive interface information sent from a serving base station, receive a downlink polling interval that is sent from the serving base station and is used for communicating with a non-serving base station, and establish a wireless connection with the non-serving base station according to the interface information and the downlink polling interval; and
a base station 1202, configured to send the interface information, send, to the non-serving base station, an uplink polling interval used for communicating with the non-serving base station, and receive a downlink polling interval that is sent from the non-serving base station and is used for communicating with the non-serving base station.

This embodiment is applicable to the embodiment shown in FIG. 8. The characteristics of this embodiment will not be described herein again.

Based on the description of the foregoing embodiments, persons skilled in the art can clearly understand that, the present invention can be implemented through hardware or in a method of software adding a necessary common hardware platform. Based on the understanding, the technical solutions of the present invention may be materialized in the form of a software product, where the software product may be stored in a nonvolatile storage medium (such as a CD-ROM, USB disk and mobile hard disk) and include several commands to enable a computer device (such as a personal computer, server or network device) to implement the method in the foregoing embodiments of the present invention.

Persons skilled in the art can understand that, the accompanying drawings are only schematic diagrams of exemplary embodiments, and the modules or processes in the accompanying drawings are not necessarily required for implementing the present invention.

Persons skilled in the art can understand that, modules in devices in the foregoing embodiments can be distributed in the devices of the embodiments according to the embodiment description, and can also be distributed in one or multiple devices different from the foregoing embodiments. The modules in the foregoing embodiments can be combined into one module or may be divided into multiple submodules.

The serial numbers of the embodiments of the present information are for description only, and should not stand for the priority of the embodiments.

The above embodiments are merely several specific embodiments of the present invention, but not intended to limit the present invention. All other embodiments obtained by persons skilled in the art based on the embodiments of the present invention without creative efforts shall fall within the protection scope of the present invention.

## Claims

1. A method for a relay to establish a connection with a base station, comprising:
receiving interface information sent from a serving base station;
obtaining resource information from the interface information, wherein the resource information is used for indicating wireless resources used when the relay communicates with a non-serving base station; and
establishing a wireless connection with the non-serving base station in the wireless resources indicated by the resource information.

2. The method according to claim 1, wherein the obtaining resource information from the interface information comprises:
obtaining an available frequency band set from the interface information and selecting uplink and downlink frequency bands; or
parsing uplink and downlink frequency bands from the interface information.

3. The method according to claim 2, wherein the available frequency band set in the interface information comprises:
information about a set of frequency bands that are not used by the serving base station or a base station around the serving base station; or
information about a set of frequency bands that are not used by the serving base station or a base station around the serving base station and are supported by the non-serving base station.

4. The method according to claim 1, wherein the obtaining resource information from the interface information comprises:
selecting uplink and downlink frequency bands from an available uplink and downlink polling interval set in the interface information; or
parsing uplink and downlink polling intervals from the interface information.

5. The method according to claim 4, wherein the available uplink and downlink polling interval set in the interface information comprises:
information about a set of uplink and downlink polling intervals that are not used by the serving base station or a base station around the serving base station; or
information about a set of uplink and downlink polling intervals that are not used by the serving base station or a base station around the serving base station and are supported by the non-serving base station.

6. The method according to claim 1, wherein the obtaining resource information from the interface information comprises:
selecting uplink and downlink time domain and frequency domain resources from an available uplink and downlink time domain and frequency domain resource set in the interface information; or
parsing uplink and downlink time domain and frequency domain resources from the interface information.

7. The method according to any one of claims 1 to 6, wherein before the establishing the wireless connection with the non-serving base station in the resources indicated by the resource information, the method further comprises:
receiving signaling of requiring the relay to initiate a random access process with the non-serving base station, wherein the signaling is sent from the serving base station.

8. The method according to any one of claims 2 to 6, further comprising:
sending selected resource information to the serving base station.

9. A relay, comprising:
a first receiving module, configured to receive interface information sent from a serving base station;
a first obtaining module, configured to obtain resource information from the interface information received by the first receiving module, wherein the resource information is used for indicating wireless resources used when the relay communicates with a non-serving base station; and
a first establishing module, configured to establish a wireless connection with the non-serving base station in the wireless resources indicated by the resource information obtained by the first obtaining module.

10. The relay according to claim 9, wherein the first obtaining module is configured to:
obtain an available frequency band set from the interface information and select uplink and downlink frequency bands; or
parse uplink and downlink frequency bands from the interface information.

11. The relay according to claim 10, wherein the first obtaining module is configured to obtain the available frequency band set from the interface information and select the uplink and downlink frequency bands, wherein the available frequency band set in the interface information comprises:
information about a set of frequency bands that are not used by the serving base station or a base station around the serving base station; or
information about a set of frequency bands that are not used by the serving base station or a base station around the serving base station and are supported by the non-serving base station.

12. The relay according to claim 9, wherein the first obtaining module is configured to:
select uplink and downlink frequency bands from an available uplink and downlink polling interval set in the interface information; or
parse uplink and downlink polling intervals from the interface information.

13. The relay according to claim 12, wherein the first obtaining module is used to select the uplink and downlink frequency bands from the available uplink and downlink polling interval set in the interface information, wherein the available uplink and downlink polling interval set in the interface information comprises:
information about a set of uplink and downlink polling intervals that are not used by the serving base station or a base station around the serving base station; or
information about a set of uplink and downlink polling intervals that are not used by the serving base station or a base station around the serving base station and are supported by the non-serving base station.

14. The relay according to claim 9, wherein the first obtaining module is configured to:
select uplink and downlink time domain and frequency domain resources from an available uplink and downlink time domain and frequency domain resource set in the interface information; or
parse uplink and downlink time domain and frequency domain resources from the interface information.

15. The relay according to any one of claims 10 to 14, further comprising:
a first feedback module, configured to send the resource information selected by the first obtaining module to the serving base station; or
a second receiving module, configured to receive signaling that is of requiring the relay to initiate a random access process with the non-serving base station and is sent from the serving base station, and instruct the first establishing module to establish the wireless connection.

16. A base station, comprising:
a second sending module, configured to send interface information to a relay, wherein the interface information includes resource information used for indicating wireless resources used when the relay communicates with a non-serving base station; and
a third sending module, configured to send the interface information to the non-serving base station, wherein the interface information includes the resource information used for indicating the wireless resources used when the non-serving base station communicates with the relay.

17. A communication system, comprising:
a relay, configured to receive interface information sent from a serving base station; obtain resource information from the interface information, wherein the resource information is used for indicating wireless resources used when the relay communications with a non-serving base station; and establish a wireless connection with the non-serving base station in the resources indicated by the resource information; and
a base station, configured to send the interface information to the relay, wherein the interface information includes the resource information used for indicating the wireless resources used when the relay communicates with the non-serving base station; and send the interface information to the non-serving base station, wherein the interface information includes the resource information used for indicating the wireless resources used when the non-serving base station communications with the relay.
